# EUROPÄISCHE PATENTSCHRIFT

(11) **EP 0 907 143 B1**
(45) Veröffentlichungstag und Bekanntmachung des Hinweises auf die Patenterteilung: **07.12.2005**
(21) Anmeldenummer: 98114680.6
(22) Anmeldetag: 05.08.1998
(51) Int. Cl.: G06K 19/10

(54) **System zur Bereitstellung von fälschungssicherer Information über einen Artikel**
System for providing security information disposed on an article
Système pour l'obtention d'information sécurisée placée sur un article

(30) Priorität: 04.10.1997 DE 19743829
(43) Veröffentlichungstag der Anmeldung: 07.04.1999
(73) Patentinhaber: Meto International GmbH, 69434 Hirschhorn/Neckar (DE)
(72) Erfinder: Rührig, Manfred, Dr., 69469 Weinheim (DE)
(74) Vertreter: Menges, Rolf

(56) Entgegenhaltungen:
- DE-U- 29 611 156
- FR-A- 2 177 768
- FR-A- 2 360 943
- FR-A- 2 711 825

## Beschreibung

Die Erfindung betrifft ein System zur Bereitstellung von fälschungssicherer Information über einen Artikel, das system bestehend aus einem ersten Element mit einem ersten Informationsinhalt (I1) und einem zweiten Element mit einem zweiten Informationsinhalt (I2), wobei beide Elemente mit dem Artikel verbunden und die Informationsinhalte (I1, I2) der beiden Elemente logisch miteinander verknüpft sind.

Maschinenlesbare Barcodes, bestehend aus einer Vielzahl von strichförmigen weißen und schwarzen Bereichen, ersetzen mehr und mehr die konkrete Preisauszeichnung von Artikeln in Warenhäusern und Lagern. Darüber hinaus werden Barcodes z.B. bei der Abfertigung von Gepäckstücken an Flugplätzen eingesetzt.

Ein Barcode enthält eine Vielzahl von Informationsinhalten. Ein von UCC (Uniform Code Council) entwickelter Barcode ist der sog. UPC (Universal Product Code). Dieser Code enthält Information über den Hersteller des entsprechend ausgezeichneten Artikels und eine spezielle Strichanordnung, die es erlaubt, die zu dem Artikel gehörenden Artikel-/Preisinformationen in eindeutiger Weise aus einer Speichereinrichtung aufzurufen. Darüber hinaus enthält der Code üblicherweise zumindest ein Prüfzeichen, das sicherstellt, daß der Code von dem Scanner (Barcode-Leser) korrekt gelesen wurde. Bei dem Barcode-Leser handelt es sich üblicherweise um einen Laser-Scanner.

Barcodes lassen sich leicht fälschen. Am einfachsten geschieht dies dadurch, daß der Barcode fotokopiert wird, wobei dem Barcode -je nach Anwendungsfall- ein niedrigerer oder höherer Preis zugeordnet ist. Eine Auszeichnung mit einem höheren Preis bietet sich beispielsweise an, wenn in Pfandrückgabe-Automaten der Pfandpreis festgestellt und automatisch als Guthaben verbucht wird.

Neben diesen Barcodes werden in Warenhäusern und Lagern in zunehmendem Maße Sicherungselemente für die elektronische Artikelsicherung eingesetzt. Durch die Verwendung derartiger Sicherungselemente lassen sich die Inventurverluste in erheblichem Maße reduzieren.

Aus der WO 97/04338 ist ein Sicherungselement bekannt geworden, das zusätzlich zu der Sicherungsfunktion in der Lage ist, einen mit dem Sicherungselement markierten Artikel identifizierbar zu machen, d.h., auch dieses im Bereich der elektronischen Artikelsicherung eingesetzte Sicherungselement enthält einen definierten Informationsinhalt. Das bekannt gewordene Sicherungselement ist folgendermaßen aufgebaut. Es besteht aus einem ersten magnetischen Material mit hoher Permeabilität und niedriger Koerzitivkraft und einem zweiten Material, welches permanent magnetisiert werden kann. Das zweite Material wird in unterschiedlichen Bereichen unterschiedlich magnetisiert. Als Folge dieser unterschiedlichen Magnetisierung in verschiedenen Bereichen sendet das Sicherungselement im Feld einer elektromagnetischen Abfrageeinrichtung ein charakteristisches Signal aus, das einen eindeutigen Rückschluß auf den gesicherten Artikel zuläßt.

Aus der FR-A-2 711 825 ist ein fälschungssicheres Etikett zur Identifikation von Artikeln bekannt, das ein metallisches Sicherungselement, welches in einem Magnetfeld ein charakteristisches Signal aussendet, sowie einen Barcode aufweist. Das Sicherungselement ist magnetisierbar und mittels des Etiketts gemeinsam mit dem Barcode, der die Preisinformation bezüglich des Artikels beinhaltet, auf dem Artikel angebracht.

Aus der FR-A-2 177 768, auf der der Oberbegriff des Anspruchs 1 beruht, ist eine Banknote mit einem metallischen Sicherheitsfaden bekannt, bei der in dem Sicherheitsfaden individualisierende Codierungen enthalten sind, welche die Herstellung von Falschgeld erschweren sollen. Die Codierungen sind mit der jeweiligen Nummer der Banknote korreliert, wobei die Banknotennummer und die Codierungen in der Speichereinheit eines Computers zentral gespeichert sind.

Ausgehend von dem Stand der Technik liegt der Erfindung die Aufgabe zugrunde, ein system der eingangs genannten Art derart auszugestalten, daß dieses zur Identifizierung von Pfandartikeln geeignet ist.

Die Aufgabe wird durch ein system nach Anspruch 1 gelöst. Insbesondere der Informationsinhalt des ersten Elements erlaubt eine Unterscheidung, ob es sich bei dem Artikel um einen Einwegartikel oder um einen Pfandartikel handelt. Für den Fall, daß es sich um einen Pfandartikel handelt, wird außerdem vom zweiten Element die Information bereitgestellt, um welche Art von Pfandartikel es sich handelt.

Das erfindungsgemäße System kann beispielsweise in einem Pfandrückgabe-Automaten eingesetzt werden.

Dabei wird unter Einbeziehung des zweiten Elements überprüft, ob eine vorgegebene logische Verknüpfung zwischen den Informationsinhalten des ersten und des zweiten Elements gegeben ist. Der Artikel wird nur dann als Pfandartikel behandelt, wenn die vorgegebene logische Verknüpfung erfüllt ist.

In einer Recheneinheit werden die Informationsinhalte (I1, I2) der beiden Elemente miteinander verglichen.

Gemäß einer vorteilhaften Ausgestaltung des erfindungsgemäßen Systems handelt es sich bei dem ersten Element um ein Sicherungselement, das im Feld einer elektronischen Abfragevorrichtung ein charakteristisches Signal aussendet. Ebensogut ist jedoch als erstes Element auch ein Barcode oder ein sonstiges Element verwendbar, solange dieses Element in der Lage ist, einen eindeutigen Informationsinhalt bereitzustellen.

Falls es sich bei dem ersten Element um ein Sicherungselement für die elektronische Artikelsicherung handelt, weist das Sicherungselement gemäß einer vorteilhaften Weiterbildung eine charakteristische Signalform auf, die es ermöglicht den zugeordneten Artikel eindeutig zu identifizieren. Alternativ kann das charakteristische Signal in einem eindeutig festgelegten Frequenzbereich liegen. Weiterhin sind alle Möglichkeiten einsetzbar, die in der Lage sind, dem Sicherungselement einen definierten Informationsinhalt zuzuordnen.

Gemäß einer vorteilhaften Weiterbildung des erfindungsgemäßen Systems wird vorgeschlagen, daß es sich bei dem zweiten Element um einen Barcode oder einen sonstigen maschinenlesbaren Code handelt.

Sobald in eine Eingabeeinrichtung das charakteristische Signal des elektronischen Sicherungselements und der Barcode eingegeben worden sind, werden (diese von der Eingabeeinrichtung an die Recheneinheit weitergeleitet und die dem speziellen Signal zugeordneten Informationsinhalte, die in einer Speichereinheit vorhanden sind, werden aufgerufen.

Nur wenn die beiden Informationsinhalte eine vordefinierte Beziehung zueinander aufweisen, wird z.B. die Preisinformation des Barcodes als korrekt angesehen.

Die logische Verknüpfung wird gemäß einer vorteilhaften Weiterbildung des erfindungsemäßen Systems dadurch hergestellt, daß das charakteristische Signal eine definierte Form aufweist und daß diese Form den Beweis für die Echtheit des Codes darstellt. Diese spezielle Form ist identifizierbar anhand der Anzahl der Peaks, anhand der Form der einzelnen Peaks oder anhand des Frequenzbereiches, in dem das charakteristische Signal liegt.

Um eine Manipulation an den Elementen unmöglich zu machen, sieht eine vorteilhafte Weiterbildung des erfindungsgemäßen Systems vor, daß das erste Element, sprich das Sicherungelement, derart in den Artikel oder in seine Verpackung integriert ist, daß es von außen nicht erkennbar ist.

Hierdurch wird verhindert, daß die Wechselwirkung zwischen den beiden Elementen durch Entfernen oder Ersetzen des Sicherungselements zerstört wird.

Die Erfindung wird anhand der nachfolgenden Figuren näher erläutert. Es zeigt:
Fig. 1: eine Darstellung eines mit dem erfindungsgemäßen System versehenen Artikels und
Fig. 2: ein Flußdiagramm zur Auswertung der Informationsinhalte der beiden Elemente.

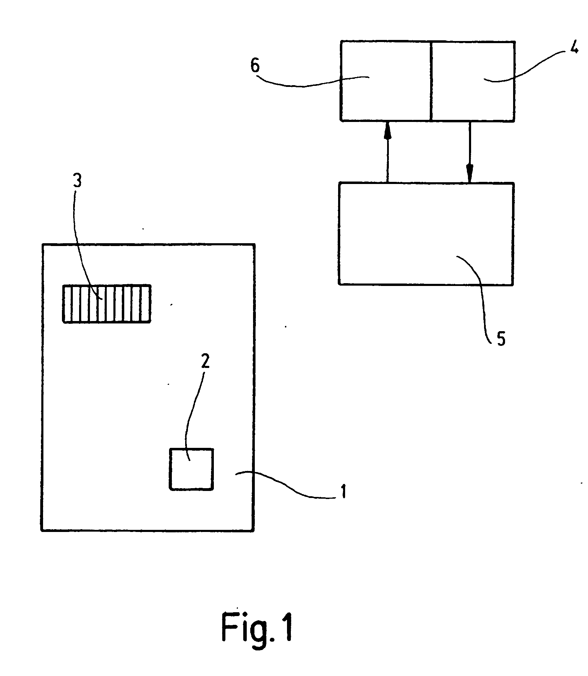

Fig. 1 zeigt eine Darstellung eines mit dem erfindungsgemäßen System versehenen Artikels. Der Artikel 1 ist mit einem ersten Element 2 und einem zweiten Element 3 ausgestattet. Vorteilhafterweise handelt es ich bei dem ersten Element 2 um ein Sicherungselement, das in einem elektromagnetischen Abfragefeld ein charakteristisches Signal aussendet, das eindeutig einem vordefinierten Informationsinhalt I1 zugeordnet werden kann. Gleiches gilt für das zweite Element 3, bei dem es sich im dargestellten Fall um einen Barcode handelt. Auch diesem Barcode ist ein eindeutiger Informationsinhalt I2 zugeordnet. Beide Informationsinhalte I1, I2 sind logisch miteinander verknüpft, so daß der Informationsinhalt des zweiten Elements 3 nur dann als gegeben hingenommen wird, wenn die vordefinierte logische Verknüpfung zu dem ersten Element 2 erfüllt ist.

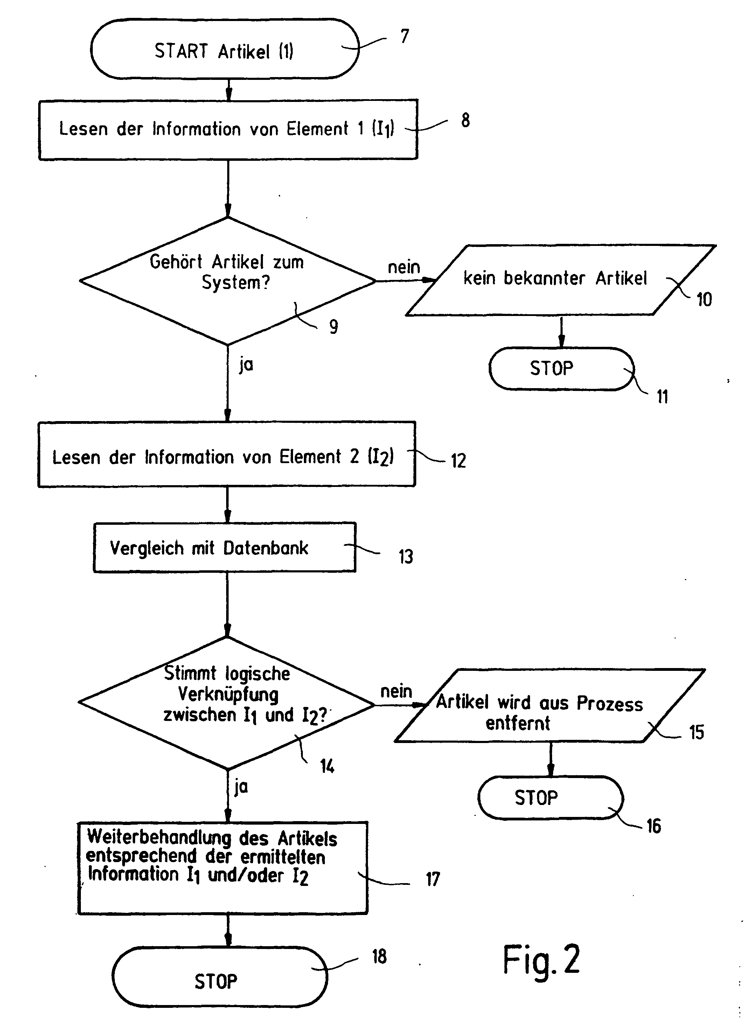

In Fig. 2 ist ein Flußdiagramm zur Auswertung der Informationsinhalte der beiden Elemente 2, 3 dargestellt. Die Auswertung wird von der Recheneinheit 6 ausgeführt. Das Programm wird unter Punkt 7 gestartet. Der Artikel 1 ist mit den Elementen 2,3 ausgestattet. Bei Punkt 8 wird der Informationsinhalt I1 des ersten Elements 2, bei dem es sich um ein Sicherungselement handelt, gelesen. Anhand des Informationsinhalts I1 erkennt die Recheneinheit 6, ob der Artikel überhaupt zu dem System gehört, beispielsweise wird hier entschieden, ob es sich um einen Pfandartikel handelt oder nicht. Erkennt die Recheneinheit den Artikel 1 als nicht zum System gehörend, so wird der Artikel 1 bei Punkt 10 ausgesondert und das Programm wird bei Punkt 11 gestoppt.

Unter Punkt 12 wird der Informationsinhalt I2 des zweiten Elements 3 gelesen. Der Informationsinhalt wird mit der in der Speichereinheit 4 enthaltenen Information verglichen. Bei Punkt 14 prüft das Programm, ob die vorgegebene logische Verknüpfung zwischen den Informationsinhalten I1, I2 der beiden Elemente 2, 3 vorliegt. Ist die logische Verknüpfung nicht vorhanden, so wird bei Punkt 15 der Artikel aus dem System entfernt und das Programm wird bei Punkt 16 abgebrochen.

Liegt die vordefinierte logische Verknüpfung zwischen den Informationsinhalten I1, I2 vor, so sind aus den beiden Informationsinhalten I1, I2 die Eigenschaften des Artikels 1 bekannt. Unter Punkt 17 wird der Artikel 1 entsprechend den anhand der beiden Elemente 2, 3 ermittelten Eigenschaften weiterbehandelt. Konkret bedeutet das für den Fall der Pfandpreisrückgabe, daß der Pfandpreis ausgezahlt oder gutgeschrieben wird und/oder daß der Artikel 1 entsprechend seinen Eigenschaften sortiert wird. Bei Punkt 18 ist die Auswertung des Artikels 1 beendet, und das Programm wird gestoppt.

## Patentansprüche

1. System zur Bereitstellung von fälschungssicherer Information über einen Artikel, das system bestehend aus einem ersten Element (2) mit einem ersten Informationsinhalt (I1) und einem zweiten Element (3) mit einem zweiten Informationsinhalt (I2), wobei beide Elemente mit dem Artikel (1) verbunden und
die Informationsinhalte (I1, I2) der beiden Elemente (2, 3) logisch miteinander verknüpft sind, **dadurch gekennzeichnet, daß** der Informationsinhalt (I1) des ersten Elements (2) eine Unterscheidung erlaubt, ob es sich bei dem Artikel (1) um einen Einwegartikel oder um einen Pfandartikel handelt, und
**daß** bei Vorliegen des zweiten Falls außerdem vom zweiten Element (3) die Information bereitgestellt wird, um welche Art von Pfandartikel es sich handelt.

2. System nach Anspruch 1,
**dadurch gekennzeichnet,**
**daß** unter Einbeziehung des zweiten Elements (3) überprüft wird, ob eine vorgegebene logische Verknüpfung zwischen den Informationsinhalten (I1, I2) des ersten und des zweiten Elements (2, 3) gegeben ist und daß der Artikel (1) nur dann als Pfandartikel behandelt wird, wenn die vorgegebene logische Verknüpfung erfüllt ist.

3. System nach Anspruch 1 oder 2,
**dadurch gekennzeichnet,**
**daß** eine Recheneinheit (6) die Informationsinhalte (I1, I2) der beiden Elemente (2, 3) miteinander vergleicht.

4. System nach Anspruch 1, 2 oder 3,
**dadurch gekennzeichnet,**
**daß** es sich bei dem ersten Element (2) um ein Sicherungselement handelt, das im Feld einer elektronischen Abfragevorrichtung ein charakteristisches Signal aussendet.

5. System nach Anspruch 4,
**dadurch gekennzeichnet,**
**daß** das Sicherungselement (2) eine identifizierbare charakteristische Signalform aufweist und/oder
**daß** das charakteristische Signal in einem eindeutig festgelegten Frequenzbereich liegt.

6. System nach einem der Ansprüche 1 bis 5,
**dadurch gekennzeichnet,**
**daß** es sich bei dem zweiten Element (3) um einen Barcode oder einen sonstigen maschinenlesbaren Code handelt.

7. System nach einem der Ansprüche 1 bis 6,
**dadurch gekennzeichnet,**
**daß** eine Speichereinheit (4) vorgesehen ist, in der zu jedem der beiden Elemente (2, 3) gehörende Daten abgespeichert sind.

8. System nach Anspruch 3 und Anspruch 4 oder 6,
**dadurch gekennzeichnet,**
**daß** eine Eingabevorrichtung (5) vorgesehen ist, die das charakteristische Signal bzw. den Code beider Elemente (2, 3) an die Recheneinheit (6) weiterleitet.

9. System nach den Ansprüchen 4 und 6,
**dadurch gekennzeichnet,**
**daß** das charakteristische Signal eine definierte Form aufweist und
**daß** diese Form den Beweis für die Echtheit des Codes darstellt.

10. System nach einem der Ansprüche 1 bis 9,
**dadurch gekennzeichnet,**
**daß** das erste Element (2) derart in den Artikel (1) oder seine Verpackung integriert ist, daß es von außen nicht erkennbar ist.

## Claims

1. A system for providing forge-proof information about an article, said system comprising a first element (2) with a first information content (I1) and a second element (3) with a second information content (I2), with both elements being connected to the article (1) and the information contents (I1, I2) of the two elements (2, 3) being linked by a logic connective,
**characterized in that** the information content (I1) of the first element (2) enables a distinction to be made as to whether the article (1) involved is disposable or returnable, and that, if it is found to be returnable, the second element (3) furthermore supplies the information about what type of returnable article is involved.

2. The system as claimed in claim 1,
**characterized in that**, using the second element (3), a check is carried out to see whether a predetermined logic connective exists between the information contents (I1, I2) of the first and the second element (2, 3), and that the article (1) is not treated as returnable until the predetermined logic connective is confirmed.

3. The system as claimed in claim 1 or 2,
**characterized in that** a computing unit (6) compares the information contents (I1, I2) of the two elements (2, 3).

4. The system as claimed in claim 1, 2 or 3,
**characterized in that** the first element (2) is a security element which emits a characteristic signal in the field of an electronic interrogating device.

5. The system as claimed in claim 4,
**characterized in that** the security element (2) has an identifiable characteristic signal shape and/or the characteristic signal lies within a clearly defined frequency range.

6. The system as claimed in any one of the claims 1 to 5,
**characterized in that** the second element (3) is a barcode or some other machine-readable code.

7. The system as claimed in any one of the claims 1 to 6,
**characterized in that** a storage unit (4) is provided holding data relating to each of the two elements (2, 3).

8. The system as claimed in claim 3 and claim 4 or 6,
**characterized in that** an input device (5) is provided transmitting the characteristic signal and the code, respectively, of the two elements (2, 3) to the computing unit (6).

9. The system as claimed in claims 4 and 6,
**characterized in that** the characteristic signal displays a defined shape and that this shape serves as proof of the code's authenticity.

10. The system as claimed in any one of the claims 1 to 9,
**characterized in that** the first element (2) is integrated in the article (1) or its packaging in such a way that it cannot be recognized from the outside.

## Revendications

1. Système pour l'obtention d'information sécurisée sur un article, le système étant composé d'un premier élément (2) pourvu d'un premier contenu d'information (I1) et d'un second élément (3) pourvu d'un second contenu d'information (I2), les deux éléments étant liés à l'article (1) et les contenus d'information (I1, I2) des deux éléments (2, 3) étant mutuellement liés logiquement, **caractérisé en ce que** le contenu d'information (I1) du premier élément (2) permet une différentiation pour savoir s'il s'agit dans le cas de l'article (1) d'un article à jeter après usage ou d'un article consigné, et **en ce qu'**en présence du second cas, on obtient en outre à partir du second élément (3) l'information indiquant de quel type d'article consigné il s'agit.

2. Système selon la revendication 1, **caractérisé en ce qu'**en associant le second élément (3), on vérifie si une liaison logique prédéfinie entre les contenus d'information (I1, I2) du premier et du second élément (2, 3) existe et **en ce que** l'article (1) est uniquement traité comme un article consigné lorsque la liaison logique prédéfinie est remplie.

3. Système selon la revendication 1 ou 2, **caractérisé en ce qu'**une unité de calcul (6) compare les contenus d'information (I1, I2) des deux éléments (2, 3) l'un avec l'autre.

4. Système selon la revendication 1, 2 ou 3, **caractérisé en ce qu'**il s'agit d'un élément de sécurité dans le cas du premier élément (2), qui envoie un signal caractéristique dans le champ d'un dispositif d'interrogation électronique.

5. Système selon la revendication 4, **caractérisé en ce que** l'élément de sécurité (2) comporte une forme de signal caractéristique identifiable et/ou **en ce que** le signal caractéristique se trouve dans une zone de fréquence définie explicitement.

6. Système selon l'une quelconque des revendications 1 à 5, **caractérisé en ce qu'**il s'agit d'un code à barres ou d'un autre code quelconque lisible par une machine dans le cas du second élément (3).

7. Système selon l'une quelconque des revendications 1 à 6, **caractérisé en ce qu'**il est prévu une unité de sauvegarde (4) dans laquelle les données appartenant à chacun des deux éléments (2, 3) sont sauvegardées.

8. système selon les revendications 3, 4 ou 6, **caractérisé en ce qu'**il est prévu un dispositif d'entrée (5) qui transmet le signal caractéristique ou le code des deux éléments (2, 3) à l'unité de calcul (6).

9. Système selon les revendications 4 et 6, **caractérisé en ce que** le signal caractéristique présente une forme définie et **en ce que** cette forme représente la preuve de l'authenticité du code.

10. Système selon l'une quelconque des revendications 1 à 9, **caractérisé en ce que** le premier élément (2) est intégré dans l'article (1) ou son emballage de manière à ce qu'il ne soit pas reconnaissable de l'extérieur.
